Europäisches Patentamt

European Patent Office

Office européen des brevets

(11) Publication number: **0 149 050**
**B1**

## (12) EUROPEAN PATENT SPECIFICATION

(45) Date of publication of patent specification: **08.08.90**

(51) Int. Cl.⁵: **H 04 N 1/415**

(21) Application number: **84113739.1**

(22) Date of filing: **14.11.84**

(54) **Facsimile transmission system.**

(30) Priority: **22.11.83 JP 218870/83**

(43) Date of publication of application:
**24.07.85 Bulletin 85/30**

(45) Publication of the grant of the patent:
**08.08.90 Bulletin 90/32**

(84) Designated Contracting States:
**DE FR GB**

(56) References cited:
**GB-A-2 010 643**
**US-A-4 261 018**
**US-A-4 366 505**

(73) Proprietor: **International Business Machines Corporation**
**Old Orchard Road**
**Armonk, N.Y. 10504 (US)**

(72) Inventor: **Asano, Hideo**
**353-5 Ohkura-cho**
**Machida-shi Tokyo (JP)**

(74) Representative: **Herzog, Friedrich Joachim, Dipl.-Ing.**
**IBM Deutschland GmbH Schönaicher Strasse 220**
**D-7030 Böblingen (DE)**

Courier Press, Leamington Spa, England.

**Description**

Field of invention

The invention relates to a method and apparatus for transmitting and receiving data representing elements of an image (PELs), in which the size of said PELs is smaller than the size of PELs being transmitted.

Background of invention

The vestigial side band amplitude modulation-phase modulation (AM-PM-VSB) has been recommended by C.C.I.T.T. for a facsimile transmission mode for the so-called GII mode facsimile terminal. The AM-PM-VSB uses an amplitude modulation which modulates the amplitude of a carrier signal in accordance with the amplitude of an input signal, and a phase modulation which inverts the phase when the amplitude of the input signal is equal to zero, the vestigial side-band (VSB) method being used for transmission.

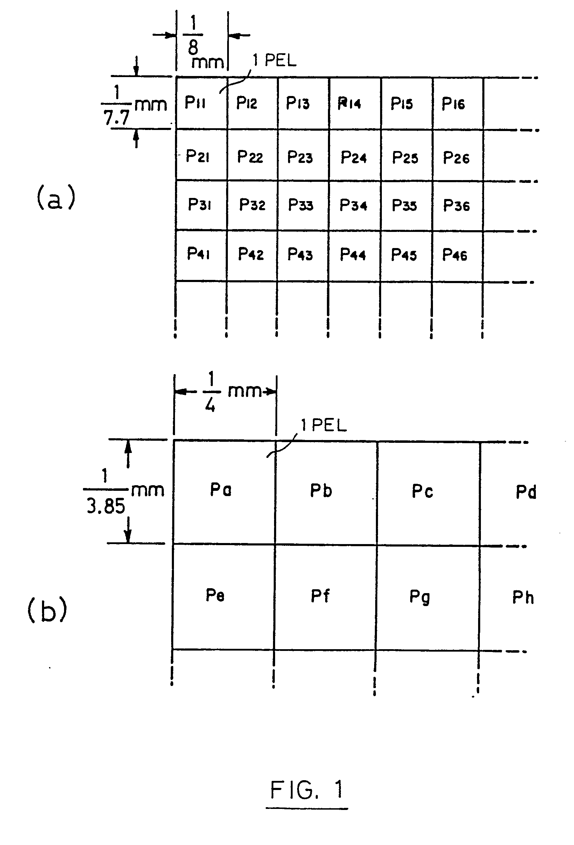

Digital facsimile terminals which are capable of operating in both GII mode and the so-called GIII mode have been recently developed. Scan density in the GII mode, i.e. the number of scan lines per mm in a subscan or vertical direction, is 3.85 lines/mm, and scan density in the GIII mode is 7.7 lines/mm. The GII/GIII digital facsimile terminal has a scanner unit which includes a large number of scanning elements arranged in a line along a main scan or horizontal direction. Typical device used as the scanner unit is CCD (Charge Coupled Device) scanner unit. To accomodate the GIII operational mode with the scan density of 7.7 scan lines/mm, CCD elements are horizontally arranged with a density of 8 elements/mm, thus each CCD element defines one PEL of 1/8 mm×1/7.7 mm, as shown in (a) of Figure 1.

In the known facsimile terminal, amplitude signals from the CCD elements representing the amount of reflected light from the original document are processed by the terminal. In the GIII mode, the facsimile terminal handles the 1/8 mm×1/7.7 mm PEL as one GIII PEL, as shown in Figure 1a. In the GII mode, the facsimile terminal handles the four GIII PELs as one GII PEL, as shown in Figure 1b. That is, one GII PEL includes four GIII PELs. The GII/GIII digital facsimile terminal changes the size of a PEL in response to the selected operational mode.

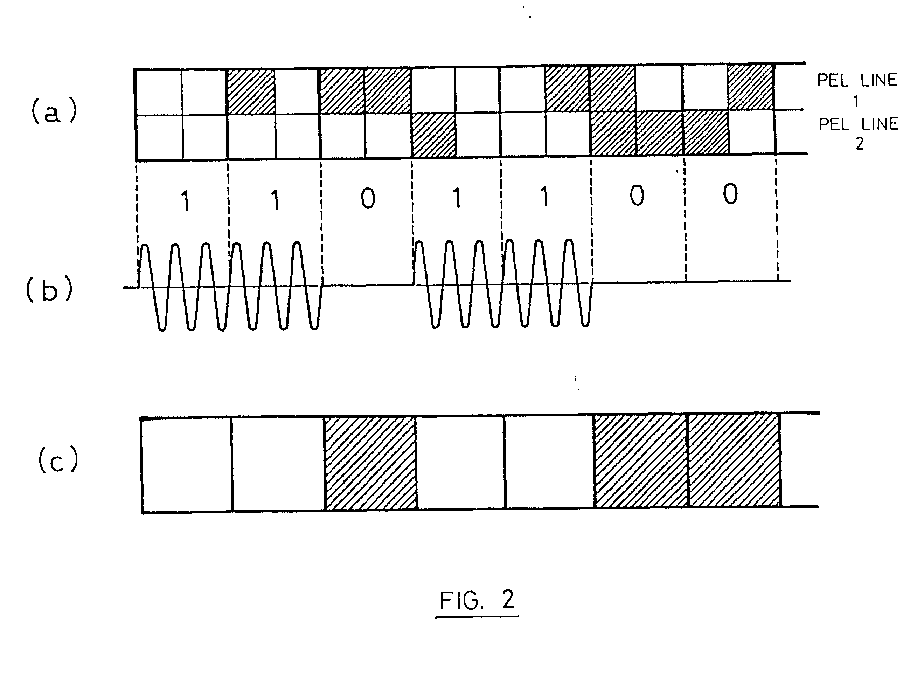

In the GIII mode facsimile operation, all PELs, i.e. $P_{11}$, $P_{12}$, $P_{13}$..., $P_{21}$, $P_{22}$, $P_{23}$,..., $P_{31}$, $P_{32}$, $P_{33}$..., and $P_{41}$, $P_{42}$, $P_{43}$..., are transmitted from the transmitter facsimile terminal to the receiver facsimile terminal through a transmission line. The receiver facsimile terminal reproduces all PELs, $P_{11}$, $P_{12}$, $P_{13}$,..., $P_{21}$, $P_{22}$, $P_{23}$,..., etc. of the original facsimile document. For the GII mode facsimile operation, PEL size is defined as 1/4 mm×1/3.85 mm, e.g. PELs, $P_a$, $P_b$, $P_c$,..., etc., shown in (b) of Figure 1. The PEL $P_a$ in the GII mode includes the PELs $P_{11}$, $P_{12}$, $P_{21}$ and $P_{22}$. The binary value, i.e. 1 or 0, of the GII mode PEL $P_a$ is determined by, for example, a majority decision of black PELs of the four GIII mode PELs $P_{11}$, $P_{12}$, $P_{21}$ and $P_{22}$. Referring to (a) of Figure 2, one example of a distribution pattern of the black and white PELs of PEL line 1 and PEL line 2, which is detected by the scanner unit is shown. PEL size in the GII mode operation is shown by thick lines which form large GII mode PELs. Each GII mode PEL contains four GIII mode PELs. First, second, fourth and fifth GII mode PELs are determined as white level, i.e. binary 1, while third, sixth and seventh GII mode PELs are determined as black level, i.e. binary 0, due to the decision by majority. The waveform of the transmitted signal is shown in (b) of Figure 2. The amplitude of the carrier signal is modulated in accordance with the determined binary values for each GII PEL. The reproduced image at the receiver facsimile terminal is shown in (c) of Figure 2. Comparing the reproduced image (c) with the scanned image (a) of Figure 2, it is apparent that the reproduced image in the GII mode operation lacks the details of the scanned image, in spite of that the scanner unit provides the detailed GIII PEL image, (a) of Figure 2.

Description of invention

The invention resolves the above problem by transmitting the detailed GIII PEL information which was lost in the above prior technology, through the GII transmission line. The image is transmitted through the transmission line using AM-PM-VSB of the GII mode and correctly reproduces the scanned PEL images (a) of Figure 2 at the receiver facsimile terminal.

The large size PELs, e.g. $P_a$, $P_b$, etc., are GII PELs of the GII transmission mode using AM-PM-VSB, and the scanned PELs, e.g. $P_{11}$, $P_{12}$, etc., are small size PELs which are PELs of higher density than that of the GII transmission mode using AM-PM-VSB. It is also noted that although the GII PEL is shown in Figure 1 as having four GIII mode PELs, the PELs of the transmission mode using AM-PM-VSB could include more GIII PELs than four, such as nine PELs, sixteen PELs, etc.

The method according to the invention is characterized in Claim 1.

Thus, while using a large size PEL transmission system, the resolution into small size PELs at the receiver is maintained.

Description of drawings

Figure 1a shows small size PELs, and

Figure 1b shows large size PELs, including a number of small size PELs.

Figure 2 shows the transmission and the reproduction of a small size PEL image through the prior transmission system.

Figure 3 shows the block diagram for a transmitter facsimile terminal.

Figure 4 shows the waveform modulated in accordance with the invention for transmitting the high density PEL image.

Figure 5 shows the assignment of sixteen subranges of the carrier amplitude to the sixteen combinations of white or black small size PELs in the sample window, respectively, and

Figure 6 shows the block diagram for a receiver facsimile terminal.

Description of preferred embodiment

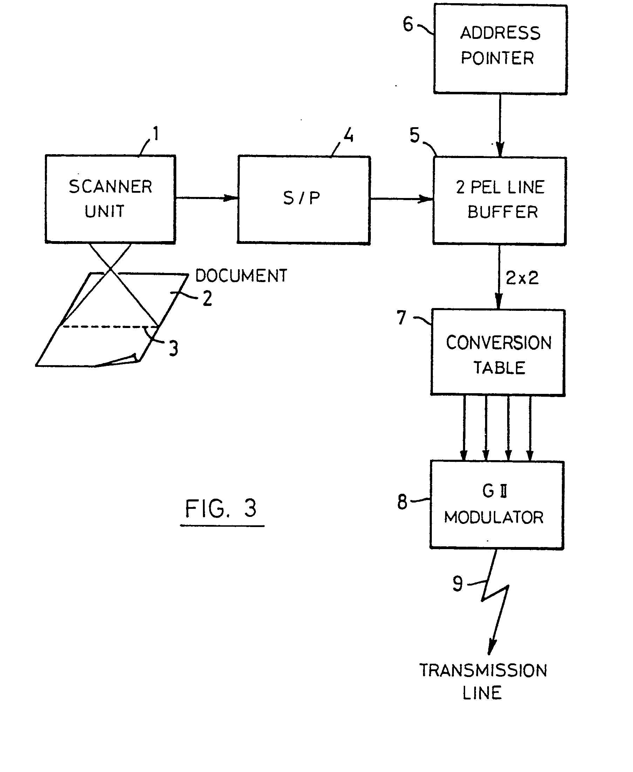

Referring to Figure 3, block diagram of a transmitter facsimile terminal is shown in which a document 2 is moved across a scanner unit 1, e.g. CCD scanner unit. Successive PEL lines 3 are scanned during the movement of the document 2. The scanner unit 1 detects the light reflected from the document 2 with the high PEL density or resolution of the GIII mode, i.e. 1/8 mm×1/7.7 mm, and produces binary signals 1 or 0 in accordance with the amount of the reflected light. The binary PEL data of one PEL line are serially supplied to serial/parallel conversion circuit 4, which converts the input serial data to a parallel data and supplies the parallel data to buffer 5.

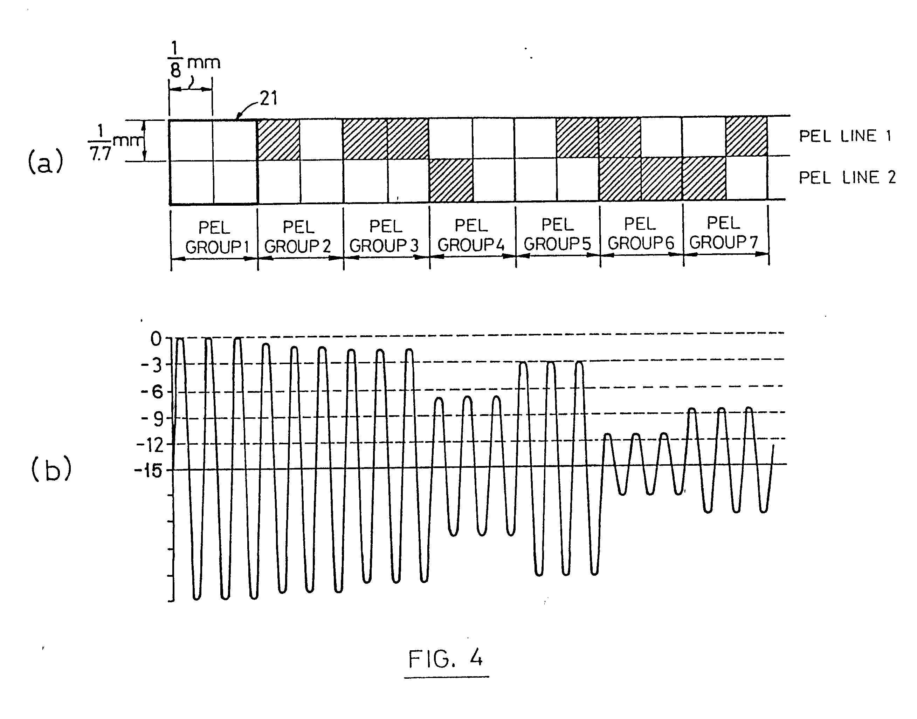

The two PEL line buffer 5 stores PEL data of two consecutive PEL lines. An example of the two PEL line data stored in the two PEL line buffer 5 is shown in (a) of Figure 4, which is selected to be the same as that shown in (a) of Figure 2, for the sake of understanding the invention.

The sample window 21 (Figure 4) is set up by address pointer 6. The size of the sample window 21 is selected to be equal to the PEL size of the GII transmission mode, i.e. 1/4 mm×1/3.85 mm and thus includes four GIII PELs.

The first sample window samples PEL group 1, second sample window samples PEL group 2, third sample window samples PEL group 3, and so on. The address pointer 6 sequentially addresses the appropriate four bit positions in the two PEL line buffer 5 to shift the sample window through the PEL groups in buffer 5.

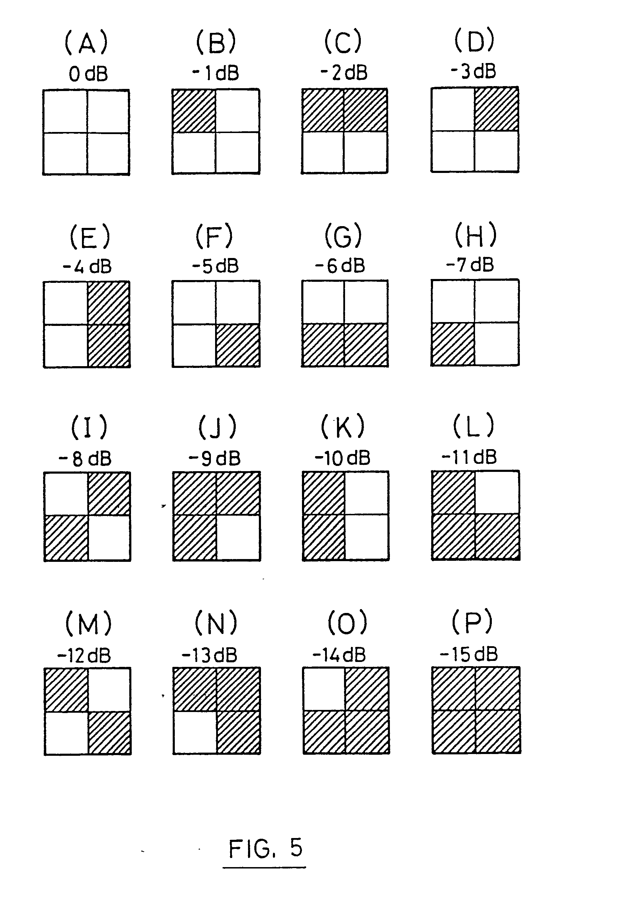

The four bits enclosed by the sample window 21 are used to access a conversion table 7. The four bits in the sample window represent sixteen combinations of the positions of white or black PELs in one window, as shown in Figure 5. The conversion table 7 stores sixteen values or entries (A)—(P) which represent the degree of amplitude modulation of the carrier signal.

Describing the amplitude modulation, the output signal in the GII mode varies between 0 dB and −26 dB, and 0 dB signal could be deemed as white signal and −26 dB signal could be deemed as black signal, in accordance with C.C.I.T.T. proposal T3. In this embodiment, the range 0 dB to −15 dB is selected. The range 0 dB to −15 dB is equally divided into the sixteen sub-ranges, and these sixteen sub-ranges are shown in the Figure 5 as entries (A)—(P). The sixteen combinations of four white or black PELs, as described above, are assigned to the sixteen sub-ranges, respectively, as shown in Figure 5.

Returning to the Figure 4, the PEL group 1 has all white bits. These four bits "1111" are supplied to the conversion table 7 to access the entry (A), shown in the Figure 5, which indicates "0 dB", which is applied to GII modulator 8 to control the degree of the amplitude modulation of the carrier signal to "0 dB". The PEL group 2 is used to control the degree of the amplitude modulation to "−1 dB", and so on, as shown in (b) of the Figure 4.

As apparent from the above description, the transmitter terminal modulates the amplitude of the transmitted carrier signal, in accordance with the bit combination sampled by the sample window 21, i.e. the distribution status or the position of black or white small size PELs enclosed by the sample window 21.

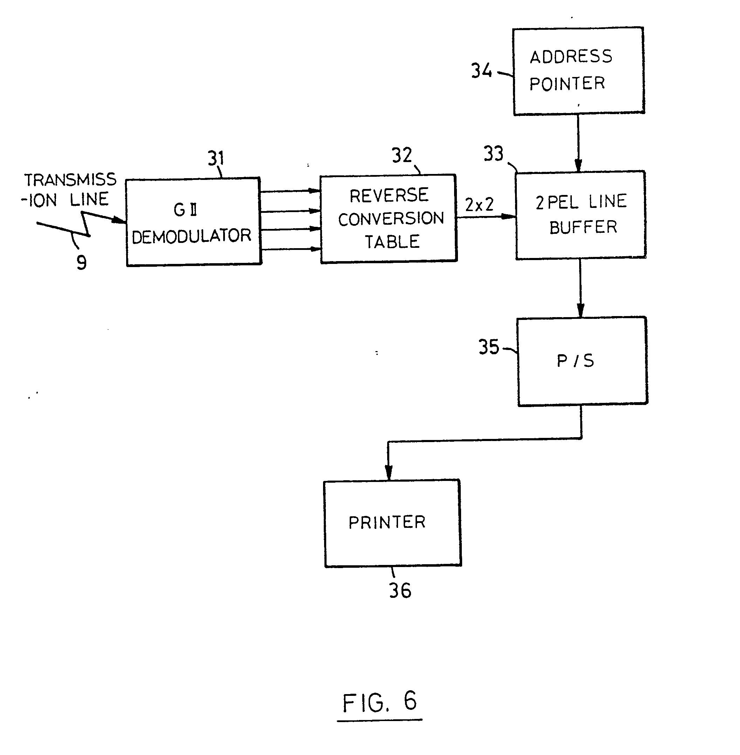

Referring to Figure 6, a block diagram of the receiver facsimile terminal is shown. The transmitted signal with the amplitude modulation as shown in (b) of the Figure 4 is supplied to GII demodulator 31. The GII demodulator 31 detects the amplitude of the received signal and produces a signal representing one of sixteen levels at its output in accordance with the detected amplitude of the received signal. For instance, a four bit signal is produced. The signal is applied to reverse conversion table 32, which stores sixteen PEL groups as shown in Figure 5, and is used to fetch one of the sixteen PEL groups. The PEL groups squentially supplied by table 32 are assembled into two PEL line buffer 33 under the control of address point 34, so that the two PEL lines of the original document image shown in (a) of the Figure 4 are reproduced in the 2 PEL line buffer 33. The address pointer 34 sequentially addresses bit positions in the two PEL line buffer 33 to sequentially store the four bit-PEL groups received from the reverse conversion table 32 into the two PEL line buffer 33. The assembled two PEL lines are supplied to printer 36 through parallel-serial conversion circuit 35 to print the original document image on a recording sheet.

For the sake of the understanding of the invention, the exemplary range 0 dB to −15 dB has been described. Taking into account noise problem in the transmission line, another range, such as −3 dB to −18 dB, −4 dB to −19 dB, could be used.

**Claims**

1. Method for transmitting data representing elements of an image (PELs) in which the size of said PELs (GIII PEL) is smaller than the size of the PELs (GII PEL) being transmitted, comprising the steps of:

scanning said image for producing PEL binary data representing white or black levels of said small size PELs (Figure 1a) of said image;

sampling said PEL data by a sample window (21) equal in size to the PEL being transmitted (Figure 1b) and including a number n×n of small size PELs;

detecting the positions of the n×n white or black PELs within said sample window;

assigning (Figure 5) one of $2^{(n \times n)}$ amplitude levels to each combination of white and black PELs in the window, respectively, and

modulating the amplitude of a carrier signal to be transmitted with said one amplitude level.

2. Method according to Claim 1 wherein a combined vestigial side band amplitude modulation/phase modulation (AM-FM-VSB) is used.

3. Method according to Claim 1, wherein n equals 2.

4. Method according to Claim 1, wherein only a subrange of the total range of possible carrier transmission amplitude levels is used for transmitting GII PELs.

5. Transmitter terminal for transmitting facsimile data according to the method of Claim 1 comprising:

a scanner unit (1) scanning lines (3) of a document (2),

a buffer (5) storing n lines of scanned small size PELs,

an address pointer (6) reading out successive windows of n×n bits of small size PEL data beginning at one end of all n stored lines and terminating at their other end,

a conversion table (7) being addressed by the n×n bits read out from the buffer (5) and generating one of $2^{(n \times n)}$ amplitude levels, and

a modulator (8) modulating a carrier signal to be transmitted by the amplitude level generated by the conversion table.

6. Receiver terminal for receiving facsimile data transmitted by the method according to Claim 1, comprising:

a demodulator (31) receiving successive one of $2^{(n \times n)}$ amplitude levels, at a time,

a reverse conversion table (32) generating a n×n bit signal in response to an amplitude level received by said demodulator (31),

a buffer (33) storing successive said n×n bit signals generated by said reverse conversion table (32), and

a second address pointer (34) reading out n lines of PEL data from said buffer (33) and transmitting it to an output unit, such as a printer (36).

## Patentansprüche

1. Verfahren zum Übertragen von Bildelemente (PELs) darstellenden Daten, wo die Größe der PELs (GIII PEL) geringer ist als die der in Übertragung befindlichen PELs (GII PEL), folgende Schritte umfassend:

Abtasten des Bildes zum Erzeugen binärer PEL-Daten, die weiße oder schwarze Stufen der kleinen PELs (Figure 1a) des Bildes darstellen;

Prüfen der PEL-Daten durch ein Prüffenster (21), das die gleiche Größe wie das in Übertragung befindliche (Figure 1b) PEL hat und eine Anzahl n×n von kleinen PELs aufweist;

Erkennen der Positionen der n×n weißen oder schwarzen PELs innerhalb des Prüffensters;

Zuordnen (Figure 5) einer von $2^{(n \times n)}$ Amplitudenstufen zu jeder Kombination von weißen bzw. schwarzen PELs im Fenster, und

Modulieren der Amplitude eines zu übertragenden Trägersignals mit der genannten einen Amplitudenstufe.

2. Verfahren nach Anspruch 1, bei dem eine kombinierte Restsietenband-Amplitudenmodulation/ Phasenmodulation (AM-FM-VSB) angewandt wird.

3. Verfahren nach Anspruch 1, bei dem n gleich 2 ist.

4. Verfahren nach Anspruch 1, bei dem nur ein Unterbereich des Gesamtbereiches von möglichen Trägertransmissionsamplitudenstufen zum Übertragen von GII PELs verwendet wird.

5. Transmitter zum Übertragen von Faksimiledaten gemäß dem Verfahren nach Anspruch 1, folgendes enthaltend:

eine Abtasteinheit (1) zum Abtasten von Zeilen (3) eines Dokumentes (2);

einen Zwischenspeicher (5) zum Speichern von n Zeilen von abgetasteten kleinen PELs,

einen Adressenzeiger (6) zum Auslesen aufeinanderfolgender Fenster von n×n Bits von Daten kleiner PELs, beginnend an einem Ende aller n gespeicherter Zeilen und endend an deren anderem Ende,

eine Umrechnungstabelle (7), welche durch die n×n aus dem Zwischenspeicher (5) ausgelesenen Bits angesteuert wird und eine von $2^{(n \times n)}$ Amplitudenstufen erzeugt, und einen Modulator (8), der ein durch die von der Umrechnungstabelle erzeugte Amplitudenstufe zu übertragendes Trägersignal moduliert.

6. Empfänger zur Aufnahme von Faksimiledaten, die gemäß dem Verfahren nach Anspruch 1, übertragen werden, folgendes enthaltend:

einen Demodulator (31), der aufeinanderfolgend jeweils eine von $2^{(n \times n)}$ Amplitudenstufen empfängt,

eine Rückumwandlungstabelle (32), welche ein n×n-Bitsignal nach einer vom Demodulator (31) empfangenen Amplitudenstufe erzeugt,

einen Zwischenspeicher (33), welcher aufeinanderfolgend die von der Rückumwandlungstabelle (32) erzeugten Bitsignale speichert, und

einen zweiten Adressenzeiger (3), welcher n Zeilen von PEL-Daten aus dem Zwischenspeicher (33) ausliest und sie in eine Ausgangseinheit wie z.B. einen Drucker (36) überträgt.

**Revendications**

1. Procédé de transmission d'éléments représentant des données d'une image (PEL) dans lequel la dimension des PEL (PEL GIII) est inférieure à la dimension des PEL (PEL GII) transmis, comprenant les étapes suivantes:

analyser l'image pour produire des données binaires de PEL représentant des niveaux de blanc ou de noir des PEL de petites dimensions (figure 1a) de l'image;

échantillonner les données de PEL par une fenêtre d'échantillon (21) de dimensions égales aux PEL émis (figure 1b) et comprenant un nombre n×n de PEL de petites dimensions;

détecter les positions des n×n PEL blancs ou noirs à l'intérieur de la fenêtre d'échantillon;

affecter (figure 5) l'un de $2^{(n \times n)}$ niveaux d'amplitude à chaque combinaison de PEL blancs et noirs dans la fenêtre, respectivement et

moduler l'amplitude d'un signal de porteuse à émettre par ledit niveau d'amplitude.

2. Procédé selon la revendication 1, dans lequel une modulation de phase/modulation d'amplitude à bande latérale résiduelle (AM-FM-VSB) est utilisée.

3. Procédé selon la revendication 1, dans lequel n est égal à 2.

4. Procédé selon la revendication 1, dans lequel une seule sous-gamme de la gamme totale de niveaux d'amplitude d'émission de porteuse possible est utilisée pour émettre des PEL GII.

5. Terminal émetteur pour émettre des données de facsimilé selon le procédé de la revendication 1 comprenant:

un module analyseur (1) analysant des lignes (3) d'un document (2),

un tampon (5) mémorisant n lignes des PEL analysés de petites dimensions,

un pointeur d'adresse (6) lisant des fenêtres successives de n×n bits de données de PEL de petites dimensions en commençant à une extrémité de toutes les n lignes mémorisées et en terminant à l'autre extrémité,

une table de conversion (7) adressée par les n×n bits lus à partir du tampon (5) et produisant l'un de $2^{(n \times n)}$ niveaux d'amplitude, et

un modulateur (8) modulant un signal de porteuse à émettre par le niveau d'amplitude produit par la table de conversion.

6. Terminal récepteur pour recevoir des données de fac-similé émises par le procédé selon la revendication 1, comprenant:

un démodulateur (31) recevant l'un successif des $2^{(n \times n)}$ niveaux d'amplitude, à un instant donné,

une table de conversion inverse (32) produisant un signal à n×n bits en réponse à un niveau d'amplitude reçu par le démodulateur (31),

un tampon (33) mémorisant successivement les n×n signaux de bit produits par la table de conversion inverse (32), et

un second pointeur d'adresse (34) lisant n lignes des données de PEL à partir du tampon (33) et les fournissant à un module de sortie tel qu'une imprimante (36).

$\frac{1}{8}$ mm

1 PEL

$\frac{1}{7.7}$ mm

| P11 | P12 | P13 | P14 | P15 | P16 |
|------|------|------|------|------|------|
| P21 | P22 | P23 | P24 | P25 | P26 |
| P31 | P32 | P33 | P34 | P35 | P36 |
| P41 | P42 | P43 | P44 | P45 | P46 |

(a)

$\frac{1}{4}$ mm

1 PEL

$\frac{1}{3.85}$ mm

| Pa | Pb | Pc | Pd |
|------|------|------|------|
| Pe | Pf | Pg | Ph |

(b)

FIG. 1

1

(a)

PEL LINE
1

PEL LINE
2

1     1     0     1     1     0     0

(b)

(c)

FIG. 2

FIG. 3

FIG. 4

EP 0 149 050 B1

(A)
0 dB

(B)
-1 dB

(C)
-2 dB

(D)
-3 dB

(E)
-4 dB

(F)
-5 dB

(G)
-6 dB

(H)
-7 dB

(I)
-8 dB

(J)
-9 dB

(K)
-10 dB

(L)
-11 dB

(M)
-12 dB

(N)
-13 dB

(O)
-14 dB

(P)
-15 dB

FIG. 5

FIG. 6